Europäisches Patentamt

European Patent Office

Office européen des brevets

(19)

(11) Publication number: **0 110 513**
A2

(12) **EUROPEAN PATENT APPLICATION**

(21) Application number: 83305792.0

(22) Date of filing: 26.09.83

(51) Int. Cl.³: **G 11 B 5/27**, G 11 B 5/42

(30) Priority: 19.10.82 US 435198

(43) Date of publication of application: 13.06.84
Bulletin 84/24

(84) Designated Contracting States: DE FR GB IT NL

(71) Applicant: GARLIC TECHNOLOGY, INC., 380 Tennant
Avenue 1, Morgan California (US)

(72) Inventor: Moore, Peter Cecil, 422 N. 26th Street No. 12,
San Jose, California (US)

(74) Representative: Beresford, Keith Denis Lewis et al,
R.G.C. Jenkins & Co. 12-15, Fetter Lane, London
EC4A 1PL (GB)

(54) Common reluctance path multi-gap magnetic transducer.

(57) A magnetic multi-gap transducer having a single inte-
grated core structure with a central common I-bar (22) and a
pair of flanking pole pieces (21, 23). A first relatively low re-
luctance magnetic path is formed by the I-bar and a first one
(21) of the flanking pole pieces to provide a recording gap
(26) having a read function capability. A second relatively
high reluctance magnetic path is formed by the central I-bar
(22) and the other flanking pole piece (23) so as to define a
second recording gap (27), the low reluctance for the sec-
ond path being provided by a relatively large non-magnetic
air gap between the I-bar and the second pole piece. The in-
tegrated core structure is embedded in a non-magnetic
slider (10), and each flanking pole piece (21, 23) has an
electromagnetic coil (31, 33) received thereon.

## COMMON RELUCTANCE PATH MULTI-GAP MAGNETIC TRANSDUCER

### Background of the Invention

This invention relates to the field of magnetic transducers, and specifically to the field of integrated transducer technology.

Magnetic transducers are known which are used for the recording and reading of information from magnetic media, particularly flexible or compliant magnetic media. Such transducers are typically fabricated from a ferrite core structure comprising a plurality of individual core pieces bonded together by fused glass having a relatively high melting point and a thermal coefficient of expansion closely matched to that of the ferrite elements. The integrated core structure is typically embedded in a mounting base, termed a slider, and coils are typically arranged about the two outer most leg portions of the integrated core assembly. The recording gaps in the pole face of the integrated core assembly typically terminate in a surface which is coextensive with the contact surface of the slider, which is typically lapped and polished to a partially spherical contour during the manufacturing process in order to provide a smooth contact surface with the compliant or flexible magnetic media with which the transducer is associated. A particular method of manufacturing the integrated core structure, and an early type of integrated transducer are disclosed, respectively, in U.S. patent numbers 4,188,247 and 3,964,103, the disclosures of which are hereby incorporated by reference.

In many applications for integrated magnetic transducers, it is frequently desirable to provide two or more read/write gaps in close proximity to one another. Due to the mutual interaction of the magnetic fields produced in each gap, commonly termed cross talk multi-gap transducers have required special design and fabrication techniques in order to minimize such cross talk. Some efforts to minimize cross talk have been directed to providing a plurality of separate integrated core structures which must be manually assembled when manufacturing the transducer. Due to the extremely small dimensions of the individual core structures, the assembly process is very delicate, time consuming and expensive. It is the object of this invention to provide a multi-gap integrated magnetic transducer requiring only a single core structure but which minimizes cross talk between multiple transducer gaps.

## Summary of the Invention

The invention comprises an integrated magnetic transducer having a plurality of gaps in a single core structure which is relatively simple and inexpensive to fabricate and which has a wide variety of uses in applications requiring separate read and write functions.

In its broadest aspect, the invention comprises an integrated core structure for a transducer having a central common reluctance path through a common I-bar, a pair of flanking pole pieces each forming at least one recording gap with the common I-bar along a pole face, one of the pole pieces forming a relatively short low reluctance back gap, or having no back gap, with the common I-bar, the other pole piece being separated from the common I-bar by a relatively large non-magnetic high reluctance gap. The relatively large non-magnetic gap significantly reduces the read efficiency of the corresponding recording gap without significantly affecting the write function provided by this recording gap. Since the read efficiency of the recording gap in the high reluctance path is reduced, the cross talk between this recording gap and the other recording gap in the read mode is significantly reduced.

In one embodiment especially suitable for either separate read and write functions or an erase before read/write function, the core structure comprises a central I-bar flanked by symmetrically formed individual pole pieces, with one pole piece magnetically linked to the I-bar by means of a separate low reluctance side bar. In another embodiment, also suitable for use for either separate read and write functions or an erase before read/write function, the I-bar is flanked on one side by a pole piece having a back leg with a terminating edge closely adjacent the I-bar, and on the other opposite side by a second pole piece having an abbreviated leg forming a relatively large air gap along the back portion of the I-bar. In another embodiment suitable for use as a trim erase after read/write application or a double guard band servo track write before or after read/write application the central common I-bar is flanked on one side with a pole piece having a back leg terminating closely adjacent the I-bar and on the other side by another pole piece having a leg with a back edge terminating substantially coextensively with the back edges of the common I-bar and the other pole piece and arranged to form a relatively large air gap with the common I-bar.

For a fuller understanding of the nature and advantages of the invention, reference should be had to the ensuing detailed description taken in conjunction with the accompanying drawings.

### Brief Description of the Drawings

Fig. 1 is a partially exploded perspective view illustrating a first embodiment of the invention;

Fig. 2 is a front elevational view of a first embodiment of the integrated core structure;

Fig. 3 is an edge view of the core structure of Fig. 2 illustrating the gap configuration;

Fig. 4 is an elevational view similar to Fig. 2 illustrating a second core structure;

Fig. 5 is an elevational view similar to Fig. 2 showing another alternate core structure;

Fig. 6 is an edge view showing the gap structure of the Fig. 5 core structure; and

Fig. 7 is an elevational view similar to Fig. 2 showing another alternate core structure.

Description of the Preferred Embodiments

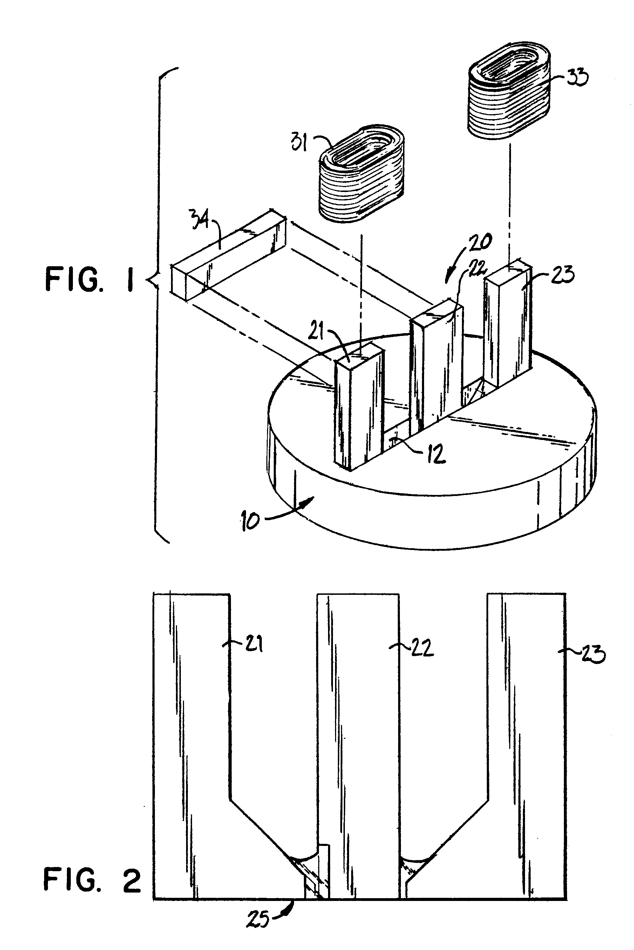

Turning now to the drawings, Fig. 1 is a schematic perspective view, partially exploded, illustrating the invention. As seen in this Fig., a disk shaped slider 10 has mechanically embedded therein a single integrated core structure generally designated with reference numeral 20 and having three upstanding legs designated with reference numerals 21, 22 and 23. A first miniature electrical coil 31 is dimensioned to be received on leg 21; while a second miniature electrical coil 33 is dimensioned to be received on leg 23. A side bar 34 is dimensioned to extend between the back portions of flanking leg 21 and central I-bar 22 in order to provide a low reluctance magnetic path therebetween.

Slider 10 is formed from any suitable non-magnetic material, such as barium titanate ceramic, having a coefficient of thermal expansion substantially equal to that of the magnetic material from which elements 21-23 and 34 are fabricated. Hidden from view in Fig. 1 is the contact surface of slider 10, which is formed to a curved contour in a manner known to those skilled in the art.

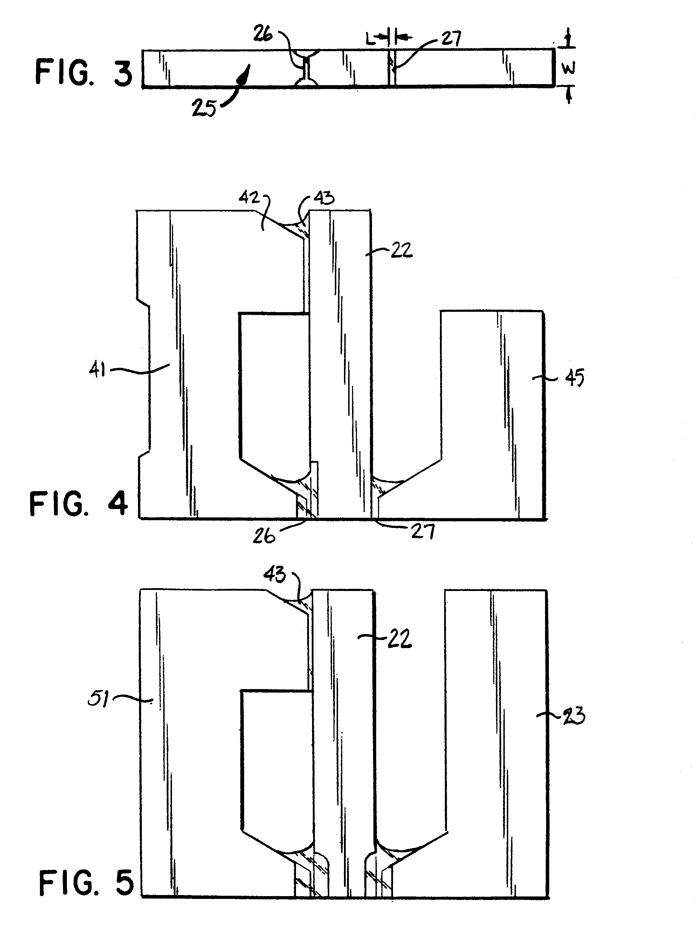

Integrated core structure 20 is embedded in a slot 12 extending through slider 10 and is typically secured in place by fused glass, epoxy or the like using conventional techniques.  As best seen in Figs. 2 and 3, which illustrate a first embodiment of the integrated core structure suitable for use in a separate read and write transducer application or an erase before read/write application, central or common I-bar 22 is flanked on each side by a pair of symmetrically shaped flanking pole pieces 21, 23.  Two gaps are formed along the pole face 25:  a first gap 26 (Fig. 3) which functions as the read gap or the read/write gap and a second longer gap 27 which functions as the write gap or the erase gap in the above noted applications. The three pole elements 21-23, which are preferably fabricated from an easily magnetizable material such as Sumitomo type H3E7A ferrite or Ferroxcube type 3H7 ferrite material, are bonded together in the region of the gaps 26, 27 by means of fused glass.  In the preferred embodiment of the structure shown in Figs. 2 and 3, the bonding glass is a material having a minimum softening point of 350°C, a coefficient of thermal expansion matched to the ferrite material to within a tolerance of $1 \times 10^{-6}$ in/in/°C, and a glass/ferrite adhesion bonding strength equal to that of the ferrite material.  The thickness dimension of each of the pole pieces 21-23 is approximately 0.063 inch, the length dimension of each pole piece is 0.210 inch, the width of each leg 21, 23 along the back edge is 0.047 inch and the width of the central I-bar 22 is 0.030 inch. The length of gap 26 is 65 microinches plus or minus 10 microinches while the length of gap 27 is 400 microinches plus or minus 20 microinches.  The width w of the entire core structure is 0.2360 inch.

When side bar 34 is attached to the rear portion of leg 21 and central I-bar 22, the relatively low reluctance magnetic path in the circuit including gap 26 provides the normal efficient read and read/write function for the assembled transducer.  On the other hand, the relatively large air gap between the rear portion of leg 23 and central I-bar 22 provides a relatively impaired read function for gap 27: the write function, however, can still be performed due to the fact that the mmf can be adjusted by either using more coil turns or a higher write current to operate the portion of the transducer which includes gap 27 and coil 33. Stated differently, from the well-known relationship:

$$flux = K \frac{mmf}{reluctance}$$

the flux required to reliable write with gap 27 can be established for the higher reluctance path including the relatively large air gap. Thus, for motion of magnetic media from right to left as viewed in Fig. 3, gap 27 can be operated as a write gap across a relatively wide track, while gap 26 can be operated as a read gap across a narrower track. Similarly, gap 27 can be operated as an erase gap while gap 26 can be operated in a combined read/write mode.

Fig. 4 illustrates another embodiment of the invention in which side bar 34 is eliminated and which affords the same functional applications as the core structure shown in Figs. 2 and 3. The configuration of the gaps 26, 27 in the Fig. 4 embodiment is identical to that shown in Fig. 3. As seen in Fig. 4, the left leg 41 is provided with an integrally formed laterally extending rear leg portion 42 which terminates closely adjacent the left edge of central I-bar 22 and is joined thereto by means of a glass bond 43 using a glass material having the same or similar properties to that used to bond the ferrite core elements together in the region of the recording gaps 26, 27. The right leg 45 has an abbreviated length with a rear edge terminating inwardly of the rear edges of leg 41 and central I-bar 22.

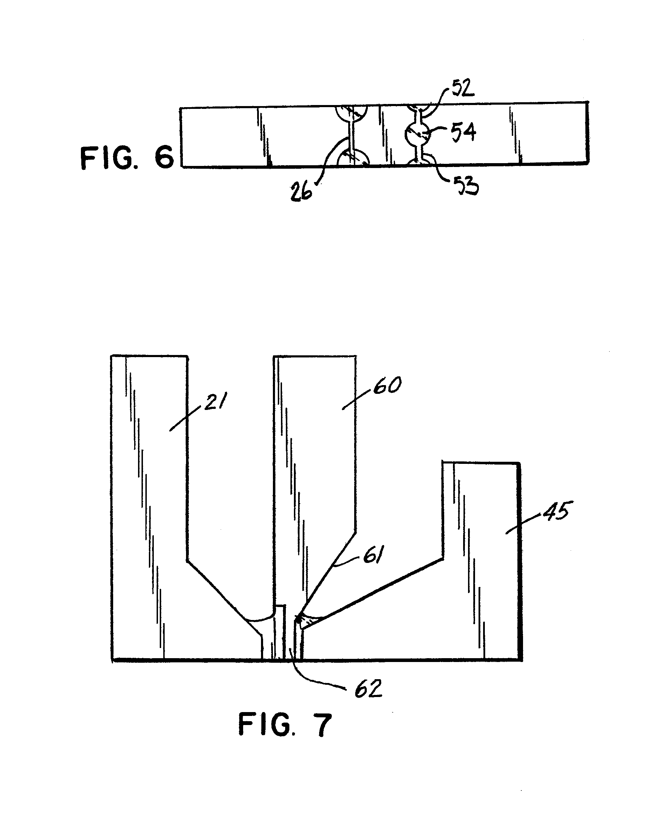

Figs. 5 and 6 illustrate another configuration of the core structure in which the left leg 51 is substantially identical to leg 41 of the Fig. 4 embodiment and is bonded to the central I-bar 22 by glass bond 43. The right leg of the core is substantially identical to leg 23 shown in Fig. 2. The first recording gap in this embodiment is substantially identical to gap 26 of the embodiment of Figs. 2 and 3. The remaining recording gap, however, consists of a pair of gaps 52, 53 which are spaced along the recording track width and separated by a relatively inactive region 54. In this embodiment, gaps 52 and 53 may be operated as trim erase gaps, while gap 26 can be operated as a read/write gap. Alternatively, gaps 52 and 53 may be used to write servo track information in guard bands flanking the central recording track defined by gap 26 which is operated in the read/write mode.

Fig. 7 illustrates another embodiment of the invention in which the central I-bar 60 has a substantial thickness at the rear portion thereof, and is tapered along portion 61 to a relatively narrow central nose region 62 terminating in the pole face. The left leg is substantially identical to the left leg 21 of the Fig. 2 embodiment, while the right leg 45 is substantially identical to the right leg 45 of the Fig. 4 embodiment. The three pole pieces are glass bonded together in the gap region as shown, and the actual gaps may be configured in the manner shown in Figs. 3 and 6.

Each of the above described embodiments shares in common a central I-bar magnetic path 22, a relatively low reluctance path formed by the I-bar 22 and one of the pole pieces 21, 41 or 51, and a relatively high reluctance path including the other pole piece 23, or 45. Each transducer may be fabricated using conventional glass bonding techniques for forming the integrated core structure and known fabrication techniques for securing the core structure to the slider 10, attaching the coils 31, 33 to the flanking legs and embedding this subassembly into a permanent housing, as fully described in the above reference U.S. patents. Since only one integrated core structure is employed, however, the assembly operation can be performed much more easily, and the absence of any additional core structures reduces the probability of transducer failure.

Transducers constructed according to the invention have a wide variety of applications in the magnetic recording art and may be used in video tape recorders, floppy disk drive applications, in longitudinal tape drives such as audio recorders, streaming tape drives, in motion picture film transport mechanisms, etc. It should be noted that, although the embodiments have been described above with respect to a slider 10, in many of these applications (e.g. in video tape applications) the transducer may be used without such a slider.

While the above provides a full and complete disclosure of the invention, various modifications, alternate constructions and equivalents may be employed without departing from the spirit of the invention. Therefore, the above description and illustrations should not be construed as limiting the scope of the invention, which is defined by the appended claims.

0110513

- 9 -

<u>CLAIMS</u>:

1. A magnetic transducer having a multi-recording gap core, characterised by a core structure having a common pole member (22) arranged between flanking pole pieces (21,23), a first one (21), of said pole pieces forming a first relatively low reluctance magnetic circuit with said common pole member (22) and having a first recording gap (25), the other one (23) of said pair of pole pieces forming a second relatively high reluctance magnetic circuit with said common pole member (22) and having a second recording gap (27).

2. A transducer according to claim 1 wherein said first recording gap (25) has a substantially shorter length than said second recording gap (27).

3. A transducer according to any preceding claim wherein said first recording gap (25) has a substantially narrower width than said second recording gap.

4. A transducer according to claim 1 or 2 wherein said pole pieces (21,23) are substantial mirror images of one another, and wherein said first magnetic circuit includes a side bar (34), extending between rear portions of said first pole piece (21) and said common pole member (22).

5. A transducer according to claim 1, 2 or 3 wherein said first pole piece includes a rear leg portion (42) extending laterally toward the common pole member (22).

6. A transducer according to claim 1, 2, 3 or 5 wherein said other pole piece (23) has a substantially shorter length than said first pole piece (21) and said common pole member (22).

7. A transducer according to any preceding claim wherein said common pole member (22) includes a relatively wide rear portion and a relatively narrow nose portion in the region of said first and second recording gaps.

8. A transducer according to any preceding claim wherein said second recording gap (27) includes a pair of recording gaps spaced along a direction parallel to the length of said first recording gap (26) to define a pair of recording gap regions (52,53) flanking a recording gap region (54) defined by the length of said first gap.

9. A transducer according to any preceding claim wherein said common pole member (22) and said pole pieces (21,23) are mechanically bonded together in the region of said first and second recording gaps (26,27) by glass.

10. A transducer according to any preceding claim embedded in a slider (10).

11. A transducer according to any preceding claim including coils around said pole pieces respectively.

12. A magnetic recording transducer comprising:

0110513

- 12 -

an integrated core structure having a common I-bar centrally arranged between a pair of flanking pole pieces, a first one of said pair of pole pieces forming a first relatively low reluctance magnetic circuit with said I-bar and having a first recording gap, the other one of said pair of pole pieces forming a second relatively high reluctance magnetic circuit with said I-bar and having a second recording gap; and

first and second electromagnetic coils each arranged about a different one of said pair of pole pieces.

FIG. I

FIG. 2

**FIG. 3**

**FIG. 4**

**FIG. 5**

0110513

FIG. 6

52
54
26
53

21
60
45
61
62

FIG. 7